# EUROPÄISCHE PATENTSCHRIFT

(11) **EP 0 825 380 B1**
(45) Veröffentlichungstag und Bekanntmachung des Hinweises auf die Patenterteilung: **02.05.2001**
(21) Anmeldenummer: 97112708.9
(22) Anmeldetag: 24.07.1997
(51) Int. Cl.: F16L 55/46, B08B 9/04

(54) **Molchsystem**
Pig for pipeline system
Racleur pour système de tuyaux

(30) Priorität: 10.08.1996 DE 19632344
(43) Veröffentlichungstag der Anmeldung: 25.02.1998
(73) Patentinhaber: FILTERWERK MANN & HUMMEL GmbH, 71631 Ludwigsburg (DE)
(72) Erfinder: Goth, Gerhard, 71726 Benningen (DE)
(74) Vertreter: Voth, Gerhard, Dipl.-Ing.

(56) Entgegenhaltungen:
- DE-C- 474 061
- US-A- 4 793 016

## Beschreibung

Die Erfindung betrifft eine Vorrichtung zur Bevorratung von Molchen, gemäβ dem Oberbegriff von Anspruch 1.

Die DE-C-474061 offenbart eine Rohrreinigungsvorrichtung, welche über ein drehbares, scheibenförmiges Sperrrad und ein mit einer Rohrleitung verbundenes Gehäuse verfügt. Vor der Beladung des Sperrrades ist eine Füllschraube, welche das Gehäuse verschließt, zu entfernen. Das Sperrrad verfügt über Aussparungen, welche zum Umfang des Sperrrades hin geöffnet sind, wodurch Scheuerbälle durch ihre Gewichtskraft von oben in die Aussparungen fallen. Weiterhin sind die Aussparungen an den Stirnflächen des Sperrrads geöffnet, wodurch ein Scheuerball durch ein Spülfluid, welches die Aussparung durchströmt, in die zu reinigende Rohrleitung gedrückt wird. In jede Aussparung kann nur ein einziger Scheuerball eingelegt werden. Nachdem ein Scheuerball aus der Aussparung heraus in die Rohrleitung gedrückt wurde, kann das Sperrrad weiter gedreht werden, bis z.B. der nächste Scheuerball in die Rohrleitung gedrückt werden kann.

Damit die Scheuerbälle, welche einen größeren Abstand zu der Aussparung aufweisen, in die zu reinigende Rohrleitung gelangen, verfügt die Rohrreinigungsvorrichtung über einen Gehäusestutzen mit einem Anschlussgewinde, durch welchen das Spülfluid mit einem Fluiddruck in das zu reinigende Rohr einbringbar ist. Der Scheuerball wird mit dem Spülfluid in das zu reinigende Rohr gespült. Bei dieser Ausführung ist jedoch eine zusätzliche Zuführleitung für das Spülfluid erforderlich, wodurch die Vorrichtung nur dort, wo eine Zuführleitung vorhanden ist, installiert werden kann.

Aufgabe der Erfindung ist daher, eine Vorrichtung zu schaffen, welche einen zum Transport erforderlichen Fluiddruck unabhängig von einem Spülfluid und der Molchgeometrie erzeugt.

Erfindungsgemäß wird diese Aufgabe dadurch gelöst, daß eine Vorrichtung geschaffen wird, die die Merkmale des Anspruchs 1 aufweist. Durch diese Merkmale wird es möglich, mehrere Molche zur Verfügung zu stellen, die über wenigstens einen Molchabgabeauslass in einer Materialförderanlage zur Reinigung derselben eingespeist werden können.

In gattungsgemäßen Materialförderanlagen wird Material häufig aufgrund von Druckgradienten bewegt. Um nun z. B. einen Unterdruck als Antriebsquelle für einen Molch aufzubauen, wobei die äußere Gestalt des Molchs ohne Bedeutung sein kann, ist der Verschluß des Förderrohres notwendig und sorgt für die entsprechende Beförderungsenergie beim plötzlichen Öffnen des Verschlußelementes.

Die Verschließung des Rohrleilungsendes hat insbesondere bei etwas luftigeren Geometrien der Molche, beispielsweise bei solchen Molchen, die einer Bürste gleichen den Vorteil, daß der erforderliche Transportunterdruck unabhängig von der Molchsgeometrie entsteht.

Eine vorteilhafte Weiterbildung der Erfindung sieht vor, daß die Vorrichtung über ein weiteres Vorratselement verfügt. Mittels diesem ist entweder die Erhöhung der in Vorlage befindlichen Molche zu erzielen, oder aber die automatische Beschickung des ersten Vorratselementes. Die automatische Beschickung kann beispielsweise in der Art erfolgen, daß ein Magazin, ähnlich einem Zigarettenautomaten, Molche enthält, die mittels einem Schieber in das erste Vorratselement verbracht werden.

Eine andere vorteilhafte Weiterbildung der Erfindung sieht vor, daß das Vorratselement eine mit wenigstens zwei Durchgangslöchern versehene Scheibe ist. Von Vorteil hierbei ist, daß die Bauform dieses sogenannten Trommelmagazins sehr kompakt gestaltet ist, bei gleichzeitig günstigen Dreheigenschaften, die sich bei der Zurverfügungstellung von Molchen bemerkbar machen.

Eine vorteilhafte Weiterbildung der Erfindung sieht vor, daß die Durchgangslöcher von einer Seite her, zur Beschickung zugänglich sind. Dies ermöglicht sowohl die automatisierte, wie auch die manuelle Beschickung des Vorratselements mit Molchen.

Eine andere vorteilhafte Weiterbildung der Erfindung sieht vor, daß die Vorrichtung über wenigstens ein Molchdetektionselement verfügt. Dieses stellt fest, ob das Vorratselement noch in ausreichendem Maße über Molche verfügt, oder ob das Vorratselement bereits mit neuen Molchen bestückt werden muß. Die Anzeige des Füllgrades des Vorratselementes kann entweder über einen Steuerkasten erfolgen, in dem z. B. ein Signal ausgelöst wird, welches einen Befüllungsvorgang des Vorratselementes veranlaßt. Eine Alternative wäre ein einfaches Licht- oder Schallsignal, welches andeutet, daß das Vorratselement von Hand befüllt werden muß.

Eine vorteilhafte Weiterbildung der Erfindung sieht vor, daß das Antriebselement ansteuerbar ist. Dadurch wird ein automatisierter Betrieb der Vorrichtung erst möglich, da dadurch in Abhängigkeit des Bedarfs an Molchen diese in die Materialförderanlage eingespeist werden können.

Eine andere vorteilhafte Weiterbildung der Erfindung sieht vor, daß das Rohrverschlußelement ansteuerbar ist.

Durch eine gezielte Einflußnahme auf das Rohrverschlußelement kann der Zeitpunkt, zu dem ein Molch die Rohrreinigung vornehmen soll exakt vorherbestimmt werden. Ohne das Rohrverschlußelement entstünde entweder ziemlich unregelmäßig der zum Transport notwendige Unterdruck oder aber gar keiner, sollte die Molchgeometrie so gestaltet sein, daß der Spalt zwischen Molch und Rohr ziemlich groß ist. Durch das Aufbauen eines Unterdruckes und die impulsartige Öffnung des Rohrverschlußelementes zu einem definierten Zeitpunkt, wird das gewünschte Ergebnis, nämlich eine definierte Reinigung der Rohre erreicht.

Ein Ausführungsbeispiel der Erfindung und ihrer vorteilhaften Weiterbildungen wird im folgenden unter Bezugnahme auf die beigefügten Zeichnungen näher beschrieben. Es stellen dar:
- Figur 1: einen Schnitt durch ein Ausführungsbeispiel
- Figur 2: eine Vorderansicht der Vorrichtung aus Figur 1, ohne Getriebe und Motor
- Figur 3: einen Schnitt durch ein alternatives Ausführungsbeispiel

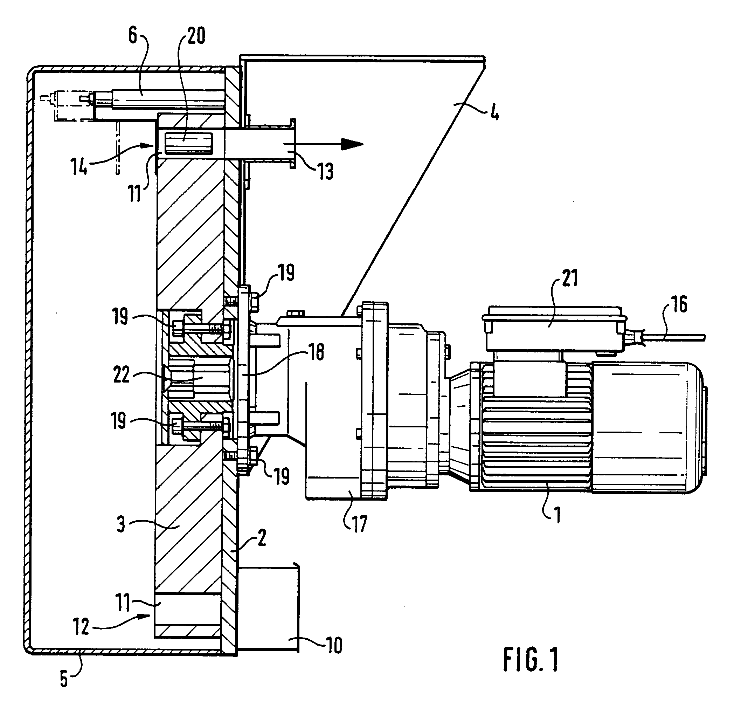

Die Vorrichtung zur Bevorratung von Molchen besteht, wie in Figur 1 dargestellt, aus Getriebemotor 1 samt Getriebe 17 wobei das Getriebe 17 mittels Getriebeflansch 18 und Schrauben 19 auf der Grundplatte 2 befestigt sind. Das Vorratselement 3, das in diesem Ausführungsbeispiel als Lochscheibe ausgebildet ist, ist drehbar über das Getriebe 17 und dessen Getriebewelle 22 mit dem Getriebemotor 1 verbunden und von diesem antreibbar. Die Wandbefestigungskonsole 4, die mit Schrauben 19 an die Grundplatte 2 geschraubt ist, trägt die gesamte Vorrichtung und ist ihrerseits an einer beliebigen, nicht dargestellten Wand befestigbar.

Die Abdeckhaube 5 bildet in Verbindung mit der Grundplatte 2 das Gehäuse 2, 5 der Vorrichtung, wobei die Abdeckhaube 5 im Falle der handbetriebenen Nachfüllung mit Molchen entweder leicht demontierbar ist, oder über Öffnungen verfügt, die es gestatten, ohne weiteres zu Vorratselement 3, insbesondere zu dessen Vorratsräumen 11 zu gelangen.

Das Vorratselement 3 verfügt über Molchaufnahmeeinlässe 12 und Molchabgabeauslässe 13, die mit Vorratsräumen 11 kommunizieren. Die Vorrichtung verfügt über ein Rohrverschlußelement 14, das sich auf der Grundplatte 2 befindet. Dieses Rohrverschlußelement 14 wird mittels Bewegungselement 6 auf das Rohrleitungsende gedrückt, wenn ein zum Transport eines Molches 20 notwendiger Unterdruck in der Rohrleitung aufgebaut werden soll. Auf der Grundplatte 2 befindet sich ein Schaltkasten 10.

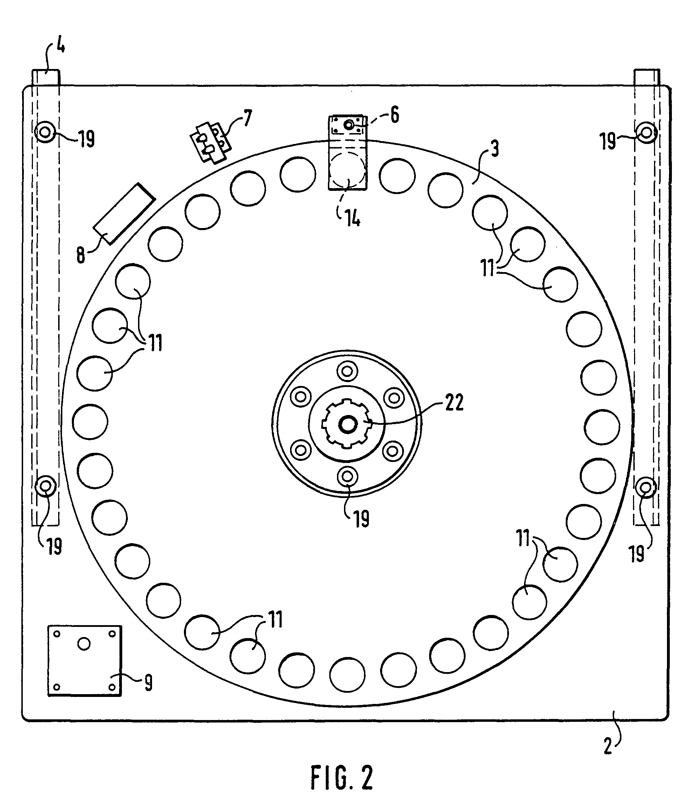

Ebenfalls auf der Grundplatte 2 befindet sich, wie in Figur 2 zu erkennen, ein IAS-Sensor 7, der über einen Schaltkasten 10 ein Signal an den Getriebemotor abgibt, um diesen zum Stillstand nach dem Weitertransport eines Vorratselements 11 zu bewegen.

Auf der Grundplatte 2 ist ein sogenannter Molchdetektor 8 installiert, mittels dessen ein Signal induziert wird, wenn kein Molch mehr in Vorlage befindlich ist, alternativ ist das Signal als Mindestvorlagesignal zu verstehen. Im vorliegenden Ausführungsbeispiel bedeutet dies, daß bei positiver Meldung mindestens drei Molche vorliegen. Mittels Taster 9 kann das Vorratselement 3 mittels Getriebemotor 1 im Hand- bzw. Tippbetrieb vorwärtsbewegt werden. Der Getriebemotor 1 ist mittels Steuerkabel 16 mit dem Schaltkasten 10 verbunden, über den ein automatischer Betrieb, in Verbindung mit einer in diesem Ausführungsbeispiel nicht dargestellten Anlagensteuerung, insbesondere in einer Kunststoffmaterialförderanlage möglich ist. Die Vorrichtung verfügt über ein Rohrverschlußelement 14, das sich auf der Grundplatte 2 befindet. Dieses Rohrverschlußelement 14 wird mittels Bewegungselement 6 auf das Rohrleitungsende gedrückt, welches hier mit dem Molchaufnahmeeinlaß identisch ist, wenn ein zum Transport eines Molches notwendiger Unterdruck in der Rohrleitung aufgebaut werden soll. Der Getriebeflansch 18 ist mittels Schrauben 19 mit der Grundplatte 2 verbunden. Die Grundplatte 2 ihrerseits ist mittels Schrauben mit einer Wandbefestigungskonsole 4 verbunden, die wiederum an einer nicht dargestellten Wand befestigt wird.

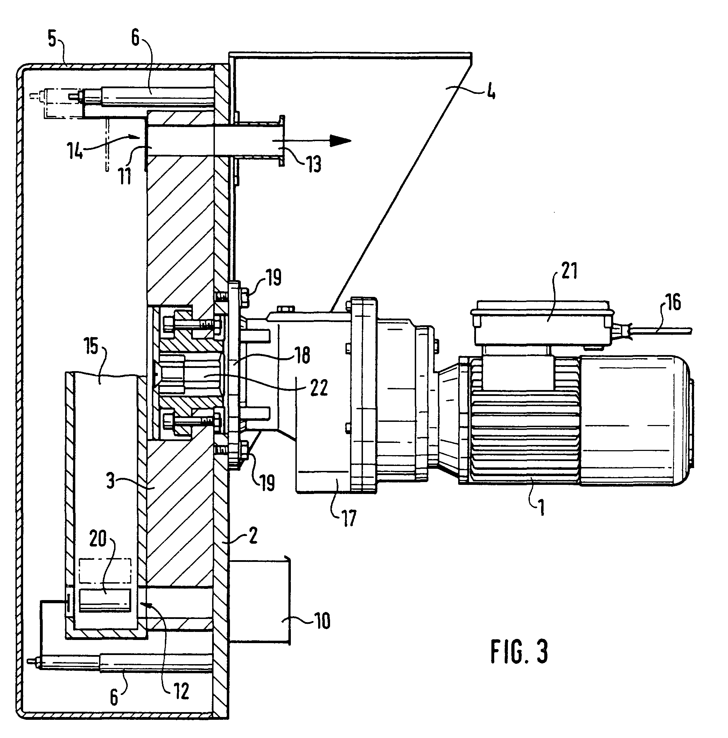

In einem alternativen Ausführungsbeispiel, das in Figur 3 dargestellt wird, kommuniziert wenigstens ein Molchvorratsmagazin 15 in der Weise mit Vorratselement 3, insbesondere mit dem Molchaufnahmeeinlaß 12, daß mittels des Molchvorratsmagazin 15 die Anzahl an vorrätigen Molchen vervielfacht werden kann. Durch ein weiteres Bewegungselement 6 in Verbindung mit einem Steuersignal, das über den Schaltkasten 10 und ein nicht dargestelltes Verbindungskabel zum Bewegungselement 6 gelangt, kann das Befüllen von Vorratselement 3 aus dem Molchvorratsmagazin automatisch erfolgen, indem das weitere Bewegungselement 6 den vorgelegten Molch 20 aus dem Molchvorratsmagazin 15 in einen Vorratsraum 11 des Vorratselementes 3 befördert. Wie in Figur 1 dargestellt, besteht die Vorrichtung in Figur 3 ebenfalls aus Getriebemotor 1 samt Getriebe 17 wobei das Getriebe 17 mittels Getriebeflansch 18 und Schrauben 19 auf der Grundplatte 2 befestigt sind. Das Vorratselement 3, das in diesem Ausführungsbeispiel als Lochscheibe ausgebildet ist, ist drehbar über das Getriebe 17 mit dem Getriebemotor 1 verbunden. Der Getriebemotor ist mittels Steuerkabel 16, das seinerseits mit der am Getriebemotor 1 befindlichen elektrischen Getriebeanschlußdose kommuniziert, mit dem Schaltkasten 10 verbunden, über den ein automatischer Betrieb, in Verbindung mit einer in diesem Ausführungsbeispiel nicht dargestellten Anlagensteuerung, insbesondere in einer Kunststoffmaterialförderanlage möglich ist. Die Wandbefestigungskonsole 4, die mit Schrauben 19 an die Grundplatte 2 geschraubt ist, trägt die gesamte Vorrichtung und ist ihrerseits an einer beliebigen, nicht dargestellten Wand befestigt. Die Abdeckhaube 5 bildet in Verbindung mit der Grundplatte 2 das Gehäuse der Vorrichtung. Das Vorratselement 3 verfügt über Molchaufnahmeeinlässe 12 und Molchabgabeauslässe 13, die mit Vorratsräumen 11 kommunizieren. Die Vorrichtung verfügt über ein Rohrverschlußelement 14, das sich auf der Grundplatte 2 befindet. Dieses Rohrverschlußelement 14 wird mittels Bewegungselement 6 auf das Rohrleitungsende gedrückt, wenn ein zum Transport eines Molches 20 notwendiger Unterdruck in der Rohrleitung aufgebaut wird.

### Bezugszeichenliste

- Getriebemotor: 1
- Grundplatte: 2
- Vorratselement: 3
- Wandbefestigungskonsole: 4
- Abdeckhaube: 5
- Bewegungselement: 6
- IAS-Sensor: 7
- Molchdetektor: 8
- Taster: 9
- Schaltkasten: 10
- Vorratsraum: 11
- Molchaufnahmeeinlaß: 12
- Molchabgabeauslaß: 13
- Rohrverschluß: 14
- Molchvorratsmagazin: 15
- Steuerkabel: 16
- Getriebe: 17
- Getriebeflansch: 18
- Schrauben: 19
- Molch: 20
- Getriebemotoranschlußdose: 21
- Getriebewelle: 22

## Patentansprüche

1. Vorrichtung zur Bevorratung von Molchen,
- wobei die Vorrichtung wenigstens ein drehbares Vorratselement (3) in einem Gehäuse (2,5) aufweist, welches über wenigstens zwei Vorratsräume (11) verfügt,
- wobei jeder Vorratsraum (11) einen Molch (20) aufnehmen kann,
- wobei die Vorrichtung wenigstens ein Antriebselement (1) aufweist, das zum Antrieb von wenigstens einem Vorratselement (3) dient,
- wobei die Vorrichtung über wenigstens einen Molchaufnahmeeinlass (12) und wenigstens einen Molchabgabeauslass (13) verfügt, **dadurch gekennzeichnet, dass**
die Vorrichtung im Bereich des Molchabgabeauslasses (13) ein Rohrverschlußelement (14) aufweist, mit welchem ein Rohrleitungsende verschließbar ist.

2. Vorrichtung nach Anspruch 1, **dadurch gekennzeichnet, dass** die Vorrichtung über ein weiteres Vorratselement (3) verfügt.

3. Vorrichtung nach Anspruch 1 oder 2, **dadurch gekennzeichnet, dass** das Vorratselement (3) eine mit wenigstens zwei Durchgangslöchem (11) versehene Scheibe (3) ist.

4. Vorrichtung nach einem der vorangehenden Ansprüche, **dadurch gekennzeichnet, dass** die Durchgangslöcher (11) von einer Seite her, zur Beschickung zugänglich sind.

5. Vorrichtung nach einem der vorangehenden Ansprüche, **dadurch gekennzeichnet, dass** die Vorrichtung über wenigstens ein Molchdetektionselement (8) verfügt.

6. Vorrichtung nach einem der vorangehenden Ansprüche, **dadurch gekennzeichnet, dass** das Antriebselement ansteuerbar ist.

7. Vorrichtung nach einem der vorangehenden Ansprüche, **dadurch gekennzeichnet, dass** das Rohrverschlusselement ansteuerbar ist.

8. Materialversorgungsanlage, **dadurch gekennzeichnet, dass** eine Vorrichtung nach einem der vorangehenden Ansprüche zur Bevorratung von Molchen zum Einsatz kommt, wobei die Molche zur Reinigung der Materialversorgungsanlage in diese einbringbar sind.

## Claims

1. Arrangement for the supplying of scrapers,
- the arrangement having at least one rotatable supplying member (3) in a housing (2, 5) which has at least two supplying chambers (11) at its disposal,
- each supplying chamber (11) being able to accommodate one scraper (20),
- the arrangement having at least one driving member (1) which is for the driving of at least one supplying member (3),
- the device having at least one scraper receiving inlet (12) and at least one scraper discharging outlet (13), characterised in that
the arrangement has a pipe closing member (14) in the area of the scraper discharging outlet (13), with which the end of a pipe line can be closed.

2. Arrangement in accordance with claim 1, characterised in that the arrangement has another supplying member (3).

3. Arrangement in accordance with claim 1 or 2, characterised in that the supplying member (3) is a disc (3) which is provided with at least two through bores (11).

4. Arrangement in accordance with one of the preceding claims, characterised in that the through bores (11) are accessible from one side for charging.

5. Arrangement in accordance with one of the preceding claims, characterised in that the arrangement has at least one scraper detecting member (8).

6. Arrangement in accordance with one of the preceding claims, characterised in that the driving member can be controlled.

7. Arrangement according to one of the preceding claims, characterised in that the pipe closing member can be controlled.

8. Material supply system characterised in that an arrangement in accordance with one of the preceding claims is used for the supplying of scrapers, the scrapers being brought into this system for the cleaning of the material supply system.

## Revendications

1. Dispositif de mise en réserve de racleurs, dans lequel
• le dispositif comporte un élément de réserve rotatif (3) placé dans un carter (2,5) comportant au moins deux chambres de réserve (11),
• chaque chambre de réserve (11) peut recevoir un racleur (20),
• le dispositif comporte un dispositif de commande (1) destiné à entraîner au moins un élément de réserve (3),
• le dispositif comporte au moins un orifice d'introduction (12) du racleur et un orifice d'extraction de ce racleur ( 13),
caractérisé en ce que,
le dispositif présente dans la zone de l'évacuation du racleur (13), un élément de fermeture de tube (14) qui peut fermer une extrémité du tube.

2. Dispositif selon la revendication 1 ,
caractérisé en ce que
le dispositif comporte un autre élément de réserve (3).

3. Dispositif selon la revendication 1 ou 2,
caractérisé en ce que
l'élément de réserve (3) est un disque (3) muni d'au moins deux orifices de traversée (11).

4. Dispositif selon l'une des revendications précédentes,
caractérisé en ce que
les orifices de traversée (11) sont accessibles à partir de l'un des côtés pour le chargement.

5. Dispositif selon l'une des revendications précédentes,
caractérisé en ce que
le dispositif comporte au moins un élément de détection de racleur (8).

6. Dispositif selon l'une des revendications précédentes,
caractérisé en ce que
l'organe d'entraînement peut être commandé.

7. Dispositif selon l'une des revendications précédentes,
caractérisé en ce que
l'élément de fermeture de tube peut être commandé.

8. Installation d'approvisionnement en matières,
caractérisé en ce qu'
elle utilise un dispositif selon l'une des revendications précédentes pour la mise en réserve de racleurs, pouvant être introduits dans cette installation en vue de son nettoyage.
